# EUROPÄISCHE PATENTSCHRIFT

(11) **EP 2 880 306 B1**
(45) Veröffentlichungstag und Bekanntmachung des Hinweises auf die Patenterteilung: **21.09.2016**
(21) Anmeldenummer: 13745583.8
(22) Anmeldetag: 01.08.2013
(51) Int. Cl.: F03D 1/06

(54) **ROTORBLATT UND ROTORBLATTSPLTZE**
ROTOR BLADE AND ROTOR BLADE TIP
PALE DE ROTOR ET POINTE DE PALE DE ROTOR

(30) Priorität: 06.08.2012 DE 102012015353
(43) Veröffentlichungstag der Anmeldung: 10.06.2015
(73) Patentinhaber: Fraunhofer-Gesellschaft zur Förderung der angewandten Forschung e.V., 80686 München (DE); Lutz, Otto, 97494 Bundorf (DE)
(72) Erfinder: LUTZ, Otto, 97494 Bundorf (DE); MEINLSCHMIDT, Peter, 38112 Braunschweig (DE); PEINKE, Joachim, 26125 Oldenburg (DE); GÜLKER, Gerd, 26127 Oldenburg (DE)
(74) Vertreter: Stornebel, Kai
(86) Internationale Anmeldenummer: PCT/EP2013/002284
(87) Internationale Veröffentlichungsnummer: WO 2014/023404

(56) Entgegenhaltungen:
- EP-A2- 1 607 624
- EP-A2- 2 320 073
- WO-A1-02/48546
- WO-A1-2006/069575
- WO-A1-2007/062659
- US-A1- 2009 035 148
- US-A1- 2009 304 505

## Beschreibung

Die Erfindung betrifft ein Rotorblatt mit einem Rotorblattkörper, der einen Rotorblattkörperhohlraum aufweist, und einer Rotorblattspitze, die mit dem Rotorblattkörperhohlraum in Verbindung steht und zumindest eine Drainageöffnung aufweist, durch die innerhalb des Rotorblattkörperhohlraumes vorhandene Feuchtigkeit abgeführt werden kann. Die Erfindung betrifft auch eine Rotorblattspitze für ein solches Rotorblatt.

Die Instandhaltungskosten von Windkraftanlagen werden zu einem erheblichen Anteil durch Blitzschlagschäden an den Rotorblättern verursacht. Die Kosten für die Beseitigung von Blitzschlagschäden betragen ungefähr 50% der Gesamtwartungskosten. Daher sind die meisten heutigen Windkraftanlagen mit einem Blitzschutz ausgestattet, der jedoch noch nicht alle Probleme beseitigt. Die üblichen Präventivmaßnahmen bestehen aus einem im Rotorblatt verlegten Metallleiter, einem sogenannten Potenzialausgleichsleiter, der in der Nähe des äußeren Endes des Rotorblattes mit einer in die Rotorblattoberfläche eingelassenen Metallscheibe oder Metallblattspitze, dem sogenannten Rezeptor, verbunden ist und so als Blitzfangeinrichtung oder Blitz ableitende Verbindung und Potentialausgleich fungiert. Über eine vom Rotor zum geerdeten Mast bestehende elektrische Verbindung kann der Strom abfließen. Die Aufgabe des Blitzableiters ist es, aufgrund seines guten Leitvermögens die zerstörerische Wärmeentwicklung zu verhindern, die mit einem hohen Dampfdruck und hohen elektrischen Feldstärken an empfindlichen Bauteilen verbunden ist. Ein Beispiel für einen solchen Rotorblatt mit einer Blitzschutzeinheit ist in der DE 10 2008 007 910 A1 beschrieben.

Problematisch ist die Verwirklichung dieser Aufgabe besonders im Bereich der Rotorblattspitzen, da es dort zu einer unpräzisen Ableitung des Blitzstrompotentials durch den Rezeptor kommt. Durch die im Rotorblatt entstehende Kondensation der Luftfeuchtigkeit sammelt sich in den Rotorblättern viel Wasser an, das durch meist zufällig in die Blattspitzen gebohrte Entwässerungsöffnungen nur ungenügend drainiert werden kann. Hierdurch kommt es zu einer Feuchtigkeitsansammlung in den Rotorblattspitzen, die nicht abtransportiert wird. Diese Feuchtigkeitsansammlung wird mit der Zeit durch unvermeidbare kleine Risse in dem Kleber des aus faserverstärkten Kunststoffen bestehenden Rotorblattes nach außen geleitet. Statt wie vorgesehen in den Rezeptor einzuschlagen, schlägt der Blitz an den kleinsten leitfähigen Stellen aufgrund der dort entstehenden größten elektrischen Felder ein, vorliegend in feuchte Einkerbungen in dem Rotorblatt.

Aufgrund aerodynamischer Überlegungen sind die Rotorblatthinterkanten und Rotorblaftspitzen möglichst scharf, was bei vorhandener Feuchtigkeit und elektrostatischer Aufladung wiederum zu hohen elektrischen Feldstärken führt, wodurch ein Blitzeinschlag auch hier begünstigt wird. Der kurzzeitig hohe Strom und der nicht genügend niedrige elektrische Widerstand des Gemisches aus Klebstoffmaterial, Glasfaserstaub sowie Wasser führen zu extrem hohen lokalen Erwärmungen, in deren Folge das Wasser im Inneren des Rotorblattes schlagartig verdampft. Der durch die Verdampfung aufgebaute Dampfdruck im Inneren des Rotorblattes bewirkt schließlich, dass dieses aufplatzt und im Bereich des Einschlages zerstört wird.

Es ist notwendig, Feuchtigkeitsansammlungen in den Rotorblättern zu verhindern, insbesondere in den Rotorblattspitzen, damit die oben beschriebenen Probleme vermieden werden. Problematisch ist zudem die Tatsache, dass die Drainageöffnungen nicht beliebig groß gemacht werden können, da die Größe aufgrund aerodynamischer Überlegungen möglichst gering sein muss. Dies führt dazu, dass die Drainageöffnungen aufgrund sich lösender Partikel aus dem Inneren des Rotorblattes leicht verstopfen können.

Die WO 2007/062659 A1 betrifft eine Blitzschutzvorrichtung für ein Rotorblatt, das ein Hohlraum aufweist. In der Rotorblattspitze ist eine Drainageöffnung ausgebildet, vor der eine Filtereinrichtung angeordnet ist.

Die WO 2006/069575 A1 betrifft ein Rotorblatt für eine Windkraftanlage, wobei das Rotorblatt einen oder mehrere Hohlkörper aufweist. Um Feuchtigkeit aus dem Rotorblatt entfernen zu können, während das Rotorblatt benutzt wird, können die Rotorblätter mit einer Anzahl von Drainageöffnungen versehen sein. Innerhalb des Rotorblattes können Filter angeordnet sein, die der Drainageöffnung vorgelagert sind.

Die US 2009/035148 A1 betrifft eine Rotorflügel-Drainageeinrichtung für Windkraftanlagen mit einem Leitblech, das im Inneren des Rotorflügels und im Inneren einer Drainageöffnung angeordnet ist, um einen Strom von Partikeln zu der Drainageöffnung zu begrenzen. Eine flexible Drainageleitung ist im Inneren des Rotorflügels angeordnet und verbindet den Hohlraum des Rotorflügels mit der Drainageöffnung.

Die EP 2 320 073 A2 betrifft ein System und ein Verfahren zum Verteilen von Luft in einem Rotorblatt einer Windkraftanlage, wobei sich ein Hohlraum innerhalb des Rotorblattes von der Nabe bis zur Rotorblattspitze erstreckt. Eine Leitung ist zumindest teilweise innerhalb des Hohlraumes angeordnet und bildet einen Durchgang. Eine Vielzahl von Öffnungen sind in einer Seitenwand des Rotorblattes ausgebildet und stellen eine strömungstechnische Verbindung zwischen dem Durchgang und der Umgebungsluft her. Eine Feststoffsammeleinrichtung ist in dem Durchgang angeordnet.

Die EP 1 607 624 A2 betrifft ein Rotorblatt für eine Windenergieanlage, wobei mindestens in einem Bereich einer Außenwand des Rotorblattes eine porige Oberfläche vorgesehen ist. Das poröse Material kann von Luft durchströmt werden. Über die porige Oberfläche wird eine Lärmreduzierung bereitgestellt. Darüber hinaus können Feuchtigkeit oder Luft aus dem Rotorblattinneren entweichen.

Die WO 02/48546 A1 betrifft ein Rotorblatt mit einer kombinierten Blitzschutzeinrichtung und Drainageöffnung, in der eine von mehreren Rezeptoren angeordnet ist. In einem distalen Rezeptor können Bohrungen angeordnet sein.

Die US 2009/0304505 A1 betrifft ein Rotorblatt für eine Windkraftanlage mit einem Sensor, um zwischen Verschmutzung und Vereisung unterscheiden zu können.

Aufgabe der vorliegenden Erfindung ist es, Wasseransammlungen in der Rotorblattspitze und damit die Gefahr unpräziser Blitzableitungen zu verhindern.

Erfindungsgemäß wird diese Aufgabe durch einen Rotorblatt mit den Merkmalen des Hauptanspruches gelöst. Vorteilhafte Ausgestaltungen und Weiterbildungen der Erfindung sind in den Unteransprüchen, der Beschreibung sowie den Figuren offenbart.

Das erfindungsgemäße Rotorblatt mit einem Rotorblattkörper, der einen Rotorblattkörperhohlraum aufweist, und einer Rotorblattspitze, die mit dem Rotorblattkörperhohlraum in Verbindung steht und die zumindest eine Drainageöffnung aufweist, durch die innerhalb des Rotorblattkörperhohlraumes vorhandene Feuchtigkeit abgeführt werden kann, sieht vor, dass in der Rotorblattspitze zumindest eine Rückhalteeinrichtung für Feststoffpartikel vor der Drainageöffnung angeordnet ist. Während aus dem Stand der Technik die Drainageöffnungen, besonders mit kleinem Querschnitt, zu Verstopfungen neigen, wenn überständiger Kleber, Staub oder abrasive Komponenten aus dem Inneren des Rotorblattes aufgrund der Zentrifugalkraft nach außen zu den Rotorblattspitzen geleitet werden, sieht die erfindungsgemäße Rotorblattspitze zumindest eine Rückhalteeinrichtung vor der Drainageöffnung vor, durch die Feststoffpartikel aufgefangen werden, so dass diese nicht zu der Drainageöffnung gelangen können. Statt eines Abtransportes der Feststoffpartikel durch die Drainageöffnung ist somit vorgesehen, dass eine Trennung von Flüssigkeit bzw. Feuchtigkeit und Feststoffpartikeln innerhalb der Rotorblattspitze vorgenommen wird, indem durch geeignete Rückhalteeinrichtungen lediglich die Feststoffpartikel zurückgehalten werden, während die Flüssigkeit oder Feuchtigkeit aus der Drainageöffnung ungehindert austreten kann. Die Rückhalteeinrichtung kann mit einer Rückstromsperre ausgestattet sein, die nach Art eines Rückschlagventils oder einer Mausefalle arbeitet und verhindert, dass einmal an der Rückhalteeinrichtung vorbeigelangte Partikel nicht wieder zurück in der Rotorblatthohlraum gelangen können. Hierzu können unterschiedliche Einrichtungen eingesetzt werden, beispielsweise Ventil, Schlauchventile, Klappe, Hinterschneidungen und dergleichen mehr. Es sind mehrere Rückhalteeinrichtungen hintereinander angeordnet, um unterschiedliche Wirkprinzipien einzusetzen und dadurch eine sichere Trennung von Flüssigkeitsphase und Feststoffphase zu erreichen. Vorteilhafterweise wird die Durchlässigkeit der Rückhalteeinrichtung in Richtung auf die Drainageeinrichtung geringer, das heißt, dass ein grober Rückhalt oder ein grober Filter als eine erste Rückhalte- oder Filterstufe vorgesehen ist, die Filterwirkung und Rückhaltewirkung für immer kleinere Partikel in Richtung auf die Drainageöffnung zunimmt, so dass unmittelbar vor der Drainageöffnung das feinste Filter angeordnet ist.

Die Rückhalteeinrichtung oder die Rückhalteeinrichtungen können als Filter, als auswechselbare Filter, als Wehr mit Überlauf und/oder als Stauscheibe ausgebildet sein. Vorteilhaft zur Verhinderung der Verschmutzung der Entwässerungsvorrichtung in Gestalt der Drainageöffnung innerhalb der Rotorblattspitze ist es, eine auswechselbare Filtereinheit in der Rotorblattspitze zu integrieren, so dass im Rahmen turnusmäßiger Überprüfungen diese Filtereinheit, die als Rückhalteeinheit dient, ausgewechselt werden kann, wenn sich die Filtereinheit durch die Feststoffpartikel zugesetzt hat. Grundsätzlich ist es auch möglich, permanente Filter einzubauen, die so dimensioniert sind, dass sie über die Lebensdauer des Rotorblattes hinweg eine ausreichende Filterwirkung bereitstellen. Statt eines Filter oder in Ergänzung zu Filtern oder Filtereinheiten ist es möglich, Stauwehre mit Überlauf oder Stauscheiben vorzusehen, durch die ein Strömungshindernis für die zu der Rotorblattspitze drängenden Feststoffpartikel aufgebaut wird. Durch das Strömungshindernis kann eine Phasentrennung von Flüssigkeitsphase und Feststoffphase bewirkt werden, so dass die Flüssigkeitsphase weiter in Richtung auf die Drainageöffnung transportiert werden kann, während die Feststoffphase zurückgehalten wird.

Die Rotorblattspitze kann als separates Bauteil ausgebildet sein und im Bereich der Anbindung an den Rotorblattkörper zumindest eine Leiteinrichtung aufweisen, die Feuchtigkeit und Feststoffpartikel in Richtung auf die Rückhalteeinrichtung leitet. Die Leiteinrichtung kann beispielsweise als eine Schwalbenschwanzanbindung der Rotorblattspitze an dem Rotorblattkörper ausgebildet sein und Schrägen aufweisen, die die Partikel an die Rückhalteeinrichtung bzw. Fangeinrichtung für die Partikel leitet.

Durch die Anordnung mehrerer Rückhalteeinrichtungen hintereinander und einer Staffelung immer feiner werdender Filter bzw. Rückhalte- und Auffangvorrichtungen für unterschiedlich große Teile, wird die Entstehung von neuem Feinschmutz durch ständiges Hin- und Herfliegen vermieden. Ebenfalls werden durch die Bindung der Partikel innerhalb der Rückhalteeinrichtung Schäden an dem Rotorblatt oder an der Rotorblattspitze verhindert, die durch das Hin- und Herfliegen innerhalb der Rotorblattspitze entstehen können.

In der Rotorblattspitze kann eine Revisionsöffnung angeordnet sein, durch die die Filtereinheit ausgetauscht bzw. kontrolliert werden kann oder über die Zugang zu den anderen Rückhalteeinrichtungen möglich ist, so dass die Rotorblattspitze mit den inneren Einbauten gereinigt werden kann. Die Revisionsöffnung kann durch eine zumindest teiltransparente Abdeckung verschlossen sein, so dass auch ohne Öffnen der Abdeckung durch eine optische Kontrolle erkannt werden kann, ob und inwieweit eine Wartung notwendig ist und gegebenenfalls Filterelemente ausgetauscht werden müssen.

In der Rotorblattspitze kann eine Licht emittierende Einrichtung angeordnet sein, beispielsweise ein Warnlicht, die z.B. über optische Lichtleitfasern betrieben wird, was zur Verbesserung der Flugsicherheit im Rahmen einer Flugbefeuerung dient. Die Licht emittierende Einrichtung oder der Leuchtkörper kann gleichzeitig auch als Sensor oder Teil einer Sensoreinrichtung zur Überwachung der Feuchtigkeit im Rotorblatt genutzt werden, ebenfalls ist es möglich, dass mit der Sensoreinrichtung auch in Zusammenwirkung mit der Licht emittierenden Einrichtung der Vereisungsgrad innerhalb der Rotorblattspitze festgestellt wird. Es ist auch möglich, dass die Rotorblattspitze als Radar und/oder Radarsensor genutzt wird, beispielsweise durch das Einschalten der Nachtwarnlichter bei Annäherung von fliegenden Objekten mit Radarausrüstung.

Eine Weiterbildung der Erfindung sieht vor, dass die Drainageöffnung auf der in Drehrichtung hinteren Seite der Rotorblattspitze angeordnet ist, während auf der in Drehrichtung vorderen Seite der Rotorblattspitze eine Belüftungsöffnung angeordnet ist, die mit der Drainageöffnung in strömungstechnischer Verbindung steht. Die Rotorblattspitze ist ebenso wie das Rotorblatt mit einem Hohlraum versehen, der auf der in Rotationsrichtung rückwärtigen Seite mit der Drainageöffnung versehen ist. Um eine aktive Belüftung und Entwässerung des Hohlraumes zu ermöglichen, ist eine Belüftungsöffnung auf der Vorderseite vorgesehen, so dass aufgrund der aerodynamischen Strömung eine aktive Belüftung an der Belüftungsöffnung und eine aktive Entlüftung an der Drainageöffnung aufgrund der aerodynamischen Umströmung in der Rotorblattspitze vorliegen. Dadurch ist gewährleistet, dass bei Betrieb der Anlage an der Drainageöffnung immer ein Unterdruck anliegt, während an der Belüftungsöffnung stets über Überdruck herrscht. Dadurch wird zusätzlich zu der Zentrifugalkraft auch der Luftdruck genutzt, um das Wasser durch die Rückhalteeinrichtungen und Filter hindurch zur Drainageöffnung zu transportieren. Die Lochgrößen und Formen sowohl der Drainageöffnung als auch der Belüftungsöffnung sind so konstruiert, dass keine ungewollten Geräusche, beispielsweise Pfeifgeräusche, entstehen.

Eine Weiterbildung der Erfindung sieht vor, dass der Rotorblattkörper an dem der Rotorblattspitze gegenüberliegenden Ende eine strömungstechnische Verbindung zu einer Abluftleitung aufweist, beispielsweise einer Abluftleitung, die aus dem Maschinenhaus führt, die in den Rotorblattkörperhohlraum mündet. Dadurch ist es möglich, das üblicherweise vorgesehene Rotorblattschott zu durchbrechen, so dass durch den aufgrund der Rotationsbewegung entstehenden Unterdruck an der Drainageöffnung warme und trockene Luft aus dem Maschinenhaus, beispielsweise der Rotorengondel, durch den kompletten Rotorblatt hindurch geleitet wird, so dass einerseits die Kondensationsrate innerhalb des Rotorblattkörperhohlraumes verringert und andererseits die Feuchtigkeit durch die Drainageöffnung herausgeführt wird.

Die Rotorblattspitze kann insbesondere stromleitend ausgebildet sein und Komponenten aus Metall, Kohlefasermaterial oder Glasfasermaterial mit innenliegendem, leitendem Metallgewebe oder Metallgitter aufweisen. Diese elektrisch leitende Rotorblattspitze stellt dann einen Rezeptor dar, der die vorgesehene Einschlagstelle für einen Blitz bildet. Die Rezeptorspitze ist mit dem Potentialausgleichsleiter verbunden.

Die Erfindung betrifft ebenfalls eine Rotorblattspitze für ein Rotorblatt gemäß den oben stehenden Ausführungen. Dies bedeutet, dass sämtliche Ausführungen zu der Rotorblattspitze, die in Verbindung mit dem Rotorblatt oder dem Rotorblattkörper aufgeführt sind, auch für die Rotorblattspitze als separates Bauteil gelten.

Nachfolgend werden Ausführungsbeispiele der Erfindung anhand der beigefügten Figuren näher erläutert. Es zeigen:
- Fig. 1 -: ein Rotorblatt einer Windkraftanlage;
- Fig. 2 -: ein Rotorblatt in Aufsicht mit Schnittdarstellung;
- Fig. 3 -: eine Seitenansicht eines Rotorblattes;
- Fig. 4 -: eine Teilansicht eines Rotorblattes mit einer Rotorblattspitze vor dem Fügen;
- Fig. 5 -: eine schematische Darstellung eines Rotorblattendes in einer ersten Ausführungsform; sowie
- Fig. 6 -: eine Teilansicht eines Rotorblattes mit einer Sensoreinrichtung und einem Leuchtelement.

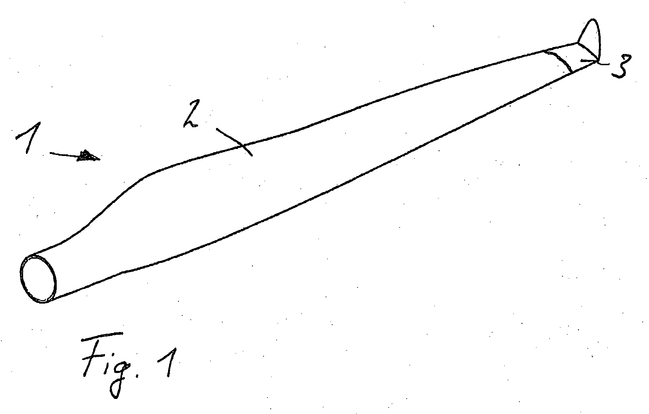

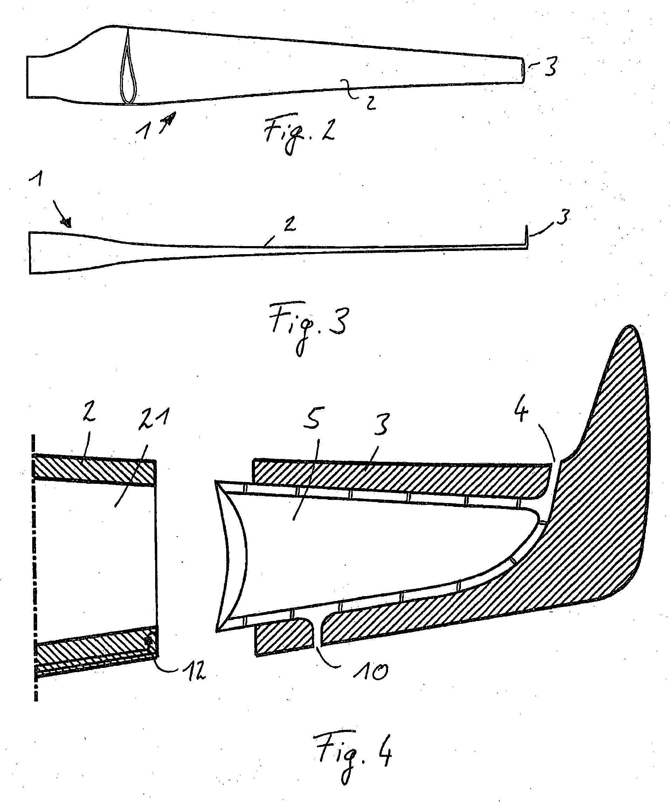

In der Figur 1 ist ein Rotorblatt 1 mit einem Rotorblattkörper 2 und einer daran befestigten Rotorblattspitze 3 dargestellt. Das Rotorblatt 1 ist Teil einer Windkraftanlage und wird an einem Rotor befestigt, der in einer sogenannten Gondel angeordnet ist. Die Rotorblattspitze 3 ist in dem dargestellten Ausführungsbeispiel auswechselbar ausgebildet, grundsätzlich ist auch eine einstückige Bauweise möglich. In der Figur 2 ist eine Rotorblatt 1 in einer Aufsicht mit eine Schnittdarstellung gezeigt, aus der das Tragflächenprofil des Rotorblattes 1 zu erkennen ist. Die Figur 3 zeigt eine Seitenansicht des Rotorblattes mit dem zur Rotorblattspitze 3 schmaler werdenden Rotorblattkörper 2, die Rotorblattspitze 3 kann als Winglet ausgebildet werden.

Die Figur 4 zeigt eine Teilansicht eines Rotorblattes 1 mit einem Rotorblattkörper 2 und einer anzuordnenden, noch nicht montierten, separaten Rotorblattspitze 3. Der Rotorblattkörper 2 weist einen schematisch dargestellten Hohlraum 21 auf. Rotorblätter 1 sind in der Regel nicht massiv aufgebaut, sondern weisen eine Hohlstruktur auf, um das Gewicht zu minimieren. An dem äußeren Ende des Rotorblattkörpers 2 kann im dargestellten Ausführungsbeispiel die separate Rotorblattspitze 3 über eine Schwalbenschwanzanbindung befestigt werden. Die Rotorblattspitze 3 ist bevorzugt stromleitend ausgebildet und weist ebenfalls einen Hohlraum 5 auf. Die Rotorblattspitze 3 kann aus Metall, Kohlefasermaterial oder Glasfasermaterial mit leitenden Komponenten, beispielsweise einem leitenden Metallgewebe oder einem leitenden Metallgitter hergestellt sein. Der Hohlraum 5 der Rotorblattspitze 3 steht in strömungstechnischer Verbindung mit dem Rotorblattkörperhohlraum 21 und weist im Bereich des äußeren Endes eine Drainageöffnung 4 auf, aus der Kondenswasser oder Feuchtigkeit oder auch Gase aus dem Hohlraum 5 austreten können. Die Drainageöffnung 4 ist auf der Oberseite der Rotorblattspitze 3 angeordnet, so dass die Feuchtigkeit oder die Partikel innerhalb des Hohlraumes 5 auf der Seite des Rotorblattes 1 austreten, auf der die konvexe Krümmung ausgebildet ist.

Die Rotorblattspitze 3 weist weiterhin eine Belüftungsöffnung 10 auf, die in der Vorderseite und auf der Unterseite der Rotorblattspitze 3 angeordnet ist. Die Vorderseite ist diejenige Seite, die in Rotationsrichtung orientiert ist. Die Drainageöffnung 4 hingegen ist auf der Rückseite der Rotorblattspitze 3 angeordnet, so dass aufgrund der aerodynamischen Verhältnisse auf der Rückseite ein Unterdruck entsteht, während auf der Vorderseite ein Überdruck aufgrund des Staudruckes vorhanden ist. Weiterhin ist die Drainageöffnung 4 radial weiter außen angeordnet ist als die Belüftungsöffnung 10. Dies bedeutet, dass sowohl aufgrund der Zentrifugalkraft als auch aufgrund der aerodynamischen Verhältnisse eine Strömungsrichtung von dem Rotorblattkörperhohlraum 21 und der Belüftungsöffnung 10 durch den Hohlraum 5 innerhalb der Rotorblattspitze 3 hindurch zu der rückwärtig orientierten Drainageöffnung 4 vorliegt. Die Drainageöffnung 4 befindet sich an dem äußeren Ende der Rotorblattspitze 3 bzw. an dem äußeren Ende des Hohlraums 5. Dadurch wird vermieden, dass Feuchtigkeit angesammelt und nicht aus dem Hohlraum 5 heraustransportiert wird.

An dem Rotorblattkörper 2 ist ein Potenzialausgleichsleiter 12 angeordnet, der mit einer elektrisch leitenden Rotorblattspitze als Rezeptor verbunden ist, der als diejenige Stelle dient, in die ein Blitz einschlagen soll. Der Potenzialausgleichsleiter ist geerdet. Der Potenzialausgleichsleiter kann dabei so ausgelegt sein, dass er nicht durchgängig zu einem Erdungsanschluss in dem Turmfuß verläuft. Vielmehr können Unterbrechungen des Potenzialausgleichsleiters vorhanden sein, die als Funkenstrecken ausgelegt sind. Die Rotorblattspitze 3 wird über eine Schwalbenschwanzverbindung an dem Rotorblattkörper 2 befestigt.

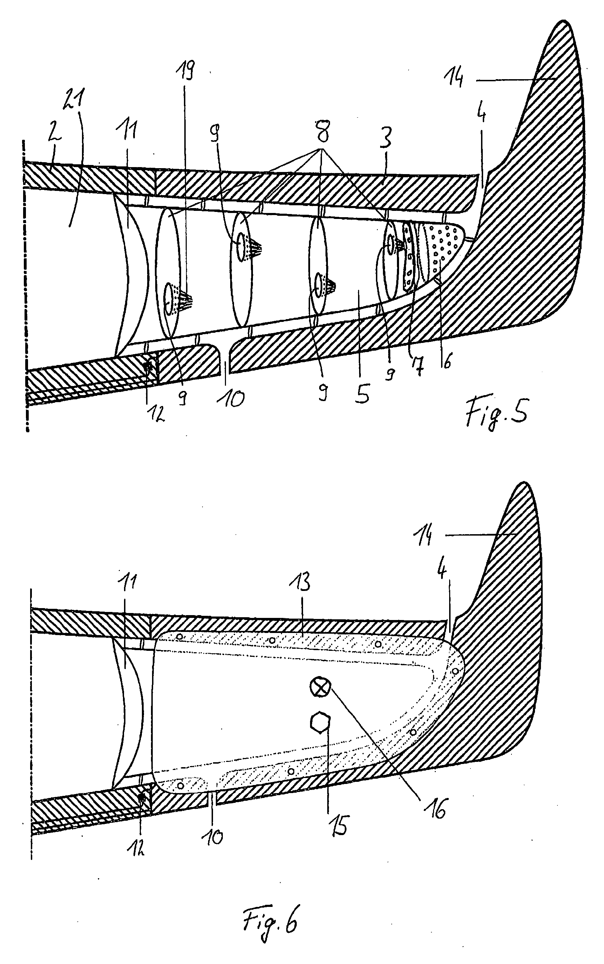

Figur 5 zeigt eine Ausführungsform der Erfindung bei der innerhalb des Hohlraumes 5 der bereits an dem Rotorblattkörper 2 befestigten Rotorblattspitze 3 mehrere Rückhälteeinrichtungen 6, 7, 8 angeordnet sind, die als Partikelfallen ausgebildet sind. Unmittelbar vor der Drainageöffnung 4 ist ein gelochter Filtereinsatz 6 angeordnet, der als Feinfilter wirkt und Staubpartikel auffängt, die aus dem Rotorblattkörperhohlraum 21 und dem Hohlraum 5 der Rotorblattspitze 3 aus der Drainageöffnung 4 austreten wollen. Dem Feinfilter 6 vorgelagert sind ein Grobfilter 7 sowie mehrere Wehre oder Stauscheiben 8, die versetzt zueinander angeordnete Überläufe 9 oder Durchgangslöcher aufweisen. Sämtliche Rückhalteeinrichtungen 6, 7, 8 sind auswechselbar ausgestaltet und können bei Wartungsarbeiten an dem Rotorblatt 1 leicht ausgetauscht oder gereinigt werden. Den Überläufen 9 oder Durchgangslöchern sind Rückhaltemechaniken 19 zugeordnet, die verhindern, dass Partikel, die aus dem Rotorblattkörperhohlraum 21 in die Rotorblattspitze 3 gelangt sind, wieder zurückfallen, beispielsweise während eines Stillstandes der Windkraftanlage. Die Rückhaltemechaniken 19 sind beispielsweise als Schlauchventile, radial nach außen gerichtete, aufeinander zulaufende Fasern, Drähte, Steg oder dergleichen oder andere ventilartige Einrichtungen ausgebildet, die einen Durchlass nach radial außen zulassen, ein Zurückfallen in Richtung auf die Drehachse des Rotors jedoch verhindern.

Der Rotorblattkörperhohlraum 21 kann mit dem Maschinenhaus der Windkraftanlage verbunden sein, so dass von dort aus warme, relativ trockene Luft durch den gesamten Rotorblattkörper 2 hindurchgeleitet werden kann, um weitere Feuchtigkeitsansammlungen zu vermeiden.

Die Belüftungsöffnung 10 ist so angeordnet, dass ein Großteil der Rückhalteeinrichtungen 6, 7, 8 zwischen der Belüftungsöffnung 10 und der Drainageöffnung 4 positioniert sind, so dass von außen einströmende Partikel wirksam zurückgehalten werden.

An einer Rotorblattspitze 3 können Einrichtungen wie Winglets 14 ausgebildet oder andere aerodynamische Hilfsmittel angeordnet sein, die eine Geräuschminimierung und eine strömungstechnische Optimierung des Rotorblattes 1 bewirken.

Ein weiterer Aspekt der Erfindung ist in der Figur 2 dargestellt, in der die Rückhalteeinrichtungen 6, 7, 8 nicht dargestellt sind. Der Hohlraum 5 der Rotorblattspitze 3 ist mit einer teiltransparenten Abdeckung 13 oder auch einer volltransparenten Abdeckung 13 abgedeckt, so dass der Hohlraum 5 gleichzeitig als von außen überprüfbare Revisionsöffnung ausgebildet ist. Durch die transparente oder teiltransparente Ausgestaltung der Abdeckung 13 ist es möglich, ohne das Entfernen der Abdeckung 13 den Zustand der innerhalb des Hohlraumes 5 befindlichen Komponenten zu kontrollieren. Ebenso ist es möglich, innerhalb des Hohlraumes 5 Leuchtelemente anzubringen, die durch die transparente Abdeckung hindurch leuchten, so dass eine Flugbefeuerung in einem geschützten Umfeld möglich ist.

Die Schwalbenschwanzanbindung der Rotorblattspitze 3 weist Leiteinrichtungen 11 in Gestalt von konkaven Zuführungen auf, so dass die Partikel aus dem Rotorblattkörperhohlraum 21 zu den Rückhalteeinrichtungen 6, 7, 8 geleitet werden. In der Figur 6 ist an der Rotorblattspitze 3 das Winglet 14 zu erkennen, ebenso sind der Potenzialausgleichsleiter 12 und die Ankopplung an die Rotorblattspitze 3 und damit an den Rezeptor dargestellt.

In der Figur 6 ist zudem eine weitere Ausgestaltung der Erfindung dargestellt, bei der in dem Hohlraum 5 der Rotorblattspitze 3 ein Leuchtelement 16 in Gestalt eines elektronischen Positionslichtes oder einer Lampe angeordnet ist, die beispielsweise durch die transparente Abdeckung 13 hindurch als ein Warnlicht dient. Das Licht kann über einen optischen Lichtleiter zu der Rotorblattspitze 3 geleitet werden. Ebenfalls ist ein Sensor 15 innerhalb der Rotorblattspitze 3 angeordnet, mit dem es möglich ist, die Temperatur, Feuchtigkeit oder die Vereisung an der Rotorblattspitze oder in der Rotorblattspitze 3 zu erfassen. Alle diese Komponenten sind zusammen mit den Rückhalteeinrichtungen 6, 7, 8 vorgesehen.

## Patentansprüche

1. Rotorblatt mit einem Rotorblattkörper (2), der einen Rotorblattkörperhohlraum (21) aufweist, und einer Rotorblattspitze (3), die mit dem Rotorblattkörperhohlraum (21) in Verbindung steht und die zumindest eine Drainageöffnung (4) aufweist, durch die innerhalb des Rotorblattkörperhohlraums (21) vorhandene Feuchtigkeit abgeführt werden kann, wobei in der Rotorblattspitze (3) zumindest eine Rückhalteeinrichtung (6, 7, 8) für Feststoffpartikel vor der Drainageöffnung (4) angeordnet ist, **dadurch gekennzeichnet, dass** mehrere Rückhalteeinrichtungen (6, 7, 8) hintereinander angeordnet sind und die Durchlässigkeit der Rückhalteeinrichtungen (6, 7, 8) in Richtung auf die Drainageöffnung (4) abnimmt.

2. Rotorblatt nach Anspruch 1, **dadurch gekennzeichnet, dass** die Rückhalteeinrichtung (6, 7, 8) als Filter, auswechselbarer Filter, Wehr mit Überlauf (9) und/oder Stauscheibe ausgebildet ist.

3. Rotorblatt nach Anspruch 1 oder 2, **dadurch gekennzeichnet, dass** die Rotorblattspitze (3) als separates Bauteil ausgebildet ist und im Bereich der Anbindung an den Rotorblattkörper (2) zumindest eine Leiteinrichtung (11) vorgesehen ist, die Feuchtigkeit und Feststoffpartikel in Richtung auf die Rückhalteeinrichtung (6, 7, 8) leitet.

4. Rotorblatt nach Anspruch 3, **dadurch gekennzeichnet, dass** die Leiteinrichtung (11) als Schwalbenschwanzanbindung der Rotorblattspitze (3) an dem Rotorblattkörper (2) ausgebildet ist.

5. Rotorblatt nach einem der voranstehenden Ansprüche, **dadurch gekennzeichnet, dass** in der Rotorblattspitze (3) eine Revisionsöffnung angeordnet, die eine zumindest teiltransparente Abdeckung (13) aufweist.

6. Rotorblatt nach einem der voranstehenden Ansprüche, **dadurch gekennzeichnet, dass** in der Rotorblattspitze (3) eine Sensoreinrichtung (15) zur Erfassung der Feuchtigkeit und/oder des Vereisungsgrades angeordnet ist.

7. Rotorblatt nach einem der voranstehenden Ansprüche, **dadurch gekennzeichnet, dass** die Drainageöffnung (4) auf der in Drehrichtung hinteren Seite der Rotorblattspitze (3) und auf der in Drehrichtung vorderen Seite der Rotorblattspitze (3) eine Belüftungsöffnung (10) angeordnet ist, die mit der Drainageöffnung (4) in strömungstechnischer Verbindung steht.

8. Rotorblattspitze für ein Rotorblatt nach einem der voranstehenden Ansprüche, die mit einem Rotorblattkörperhohlraum (21) in Verbindung steht und die zumindest eine Drainageöffnung (4) aufweist, durch die innerhalb des Rotorblattkörperhohlraums (21) vorhandene Feuchtigkeit abgeführt werden kann, wobei in der Rotorblattspitze (3) zumindest eine Rückhalteeinrichtung (6, 7, 8) für Feststoffpartikel vor der Drainageöffnung (4) angeordnet ist, **dadurch gekennzeichnet, dass** mehrere Rückhalteeinrichtungen (6, 7, 8) hintereinander angeordnet sind und die Durchlässigkeit der Rückhalteeinrichtungen (6, 7, 8) in Richtung auf die Drainageöffnung (4) abnimmt.

9. Rotorblattspitze nach Anspruch 8, **dadurch gekennzeichnet, dass** die Rückhalteeinrichtung (6, 7, 8) als Filter, auswechselbarer Filter, Wehr mit Überlauf (9) und/oder Stauscheibe ausgebildet ist.

10. Rotorblattspitze nach Anspruch 8 oder 9, **dadurch gekennzeichnet, dass** im Bereich der Anbindung an den Rotorblattkörper (2) zumindest eine Leiteinrichtung (11) vorgesehen ist, die Feuchtigkeit und Feststoffpartikel in Richtung auf die Rückhalteeinrichtung (6, 7, 8) leitet.

11. Rotorblattspitze nach Anspruch 10, **dadurch gekennzeichnet, dass** die Leiteinrichtung (11) als Schwalbenschwanzanbindung der Rotorblattspitze (3) an dem Rotorblattkörper (2) ausgebildet ist.

12. Rotorblattspitze nach einem der Ansprüche 8 bis 11, **dadurch gekennzeichnet, dass** in der Rotorblattspitze (3) eine Revisionsöffnung angeordnet, die eine zumindest teiltransparente Abdeckung (13) aufweist.

13. Rotorblattspitze nach einem der Ansprüche 8 bis 12, **dadurch gekennzeichnet, dass** in der Rotorblattspitze (3) eine Licht emittierende Einrichtung (16) angeordnet ist.

14. Rotorblattspitze nach einem der Ansprüche 8 bis 13, **dadurch gekennzeichnet, dass** in der Rotorblattspitze (3) eine Sensoreinrichtung (15) zur Erfassung der Feuchtigkeit und/oder des Vereisungsgrades angeordnet ist.

15. Rotorblattspitze nach einem der Ansprüche 8 bis 14, **dadurch gekennzeichnet, dass** die Rotorblattspitze (3) als Rezeptor ausgebildet ist.

## Claims

1. Rotor blade with a rotor blade body (2) that has a rotor blade body cavity (21), and with a rotor blade tip (3) that is connected to the rotor blade body cavity (21) and that has at least one drainage opening (4) through which moisture present inside the rotor blade body cavity (21) can be discharged, wherein in the rotor blade tip (3) at least one retention device (6, 7, 8) for solid particles is arranged in front of the drainage opening (4), **characterized in that** multiple retention devices (6, 7, 8) are arranged in series and the permeability of the retention devices (6, 7, 8) decreases towards the drainage opening (4).

2. Rotor blade according to Claim 1, **characterized in that** the retention device (6, 7, 8) is in the form of a filter, a replaceable filter, a weir with overflow (9) and/or a baffle plate.

3. Rotor blade according to Claim 1 or 2, **characterized in that** the rotor blade tip (3) is designed as a separate component and at least one guiding device (11) is provided in the region of the attachment to the rotor blade body (2), which guiding device guides moisture and solid particles towards the retention device (6, 7, 8).

4. Rotor blade according to Claim 3, **characterized in that** the guiding device (11) is designed as a dovetail attachment between the rotor blade tip (3) and the rotor blade body (2).

5. Rotor blade according to one of the preceding claims, **characterized in that** an inspection opening is arranged in the rotor blade tip (3), which opening has an at least partially transparent cover (13).

6. Rotor blade according to one of the preceding claims, **characterized in that** a sensor device (15), for detecting the moisture and/or the degree of icing, is arranged in the rotor blade tip (3).

7. Rotor blade according to one of the preceding claims, **characterized in that** the drainage opening (4) is arranged on the rear side - in the direction of rotation - of the rotor blade tip (3) and a ventilation opening (10), which is fluidically connected to the drainage opening (4), is arranged on the front side - in the direction of rotation - of the rotor blade tip (3).

8. Rotor blade tip for a rotor blade according to one of the preceding claims, that is connected to a rotor blade body cavity (21) and that has at least one drainage opening (4) through which moisture present inside the rotor blade body cavity (21) can be discharged, wherein in the rotor blade tip (3) at least one retention device (6, 7, 8) for solid particles is arranged in front of the drainage opening (4), **characterized in that** multiple retention devices (6, 7, 8) are arranged in series and the permeability of the retention devices (6, 7, 8) decreases towards the drainage opening (4).

9. Rotor blade tip according to Claim 8, **characterized in that** the retention device (6, 7, 8) is in the form of a filter, a replaceable filter, a weir with overflow (9) and/or a baffle plate.

10. Rotor blade tip according to Claim 8 or 9, **characterized in that** at least one guiding device (11) is provided in the region of the attachment to the rotor blade body (2), which guiding device guides moisture and solid particles towards the retention device (6, 7, 8).

11. Rotor blade tip according to Claim 10, **characterized in that** the guiding device (11) is designed as a dovetail attachment between the rotor blade tip (3) and the rotor blade body (2).

12. Rotor blade tip according to one of Claims 8 to 11, **characterized in that** an inspection opening is arranged in the rotor blade tip (3), which opening has an at least partially transparent cover (13).

13. Rotor blade tip according to one of Claims 8 to 12, **characterized in that** a light-emitting device (16) is arranged in the rotor blade tip (3).

14. Rotor blade tip according to one of Claims 8 to 13, **characterized in that** a sensor device (15), for detecting the moisture and/or the degree of icing, is arranged in the rotor blade tip (3).

15. Rotor blade tip according to one of Claims 8 to 14, **characterized in that** the rotor blade tip (3) is designed as a receptor.

## Revendications

1. Pale de rotor comportant un corps de pale de rotor (2) pourvu d'un creux (21) et une pointe de pale de rotor (3) qui est en communication avec le creux (21) du corps de pale de rotor et qui présente au moins un orifice de drainage (4) à travers lequel peut s'évacuer de l'humilité existant à l'intérieur du creux (21) du corps de pale de rotor, au moins un dispositif de retenue (6, 7, 8) pour des particules solides étant agencé devant l'orifice de drainage (4) dans la pointe de pale de rotor (3), **caractérisée en ce que** plusieurs dispositifs de retenue (6, 7, 8) sont agencés les uns derrière les autres et la perméabilité des dispositifs de retenue (6, 7, 8) diminue en direction de l'orifice de drainage (4).

2. Pale de rotor selon la revendication 1, **caractérisée en ce que** le dispositif de retenue (6, 7, 8) est réalisé sous forme de filtre, de filtre interchangeable, de déversoir pourvu d'un trop-plein (9) et/ou d'un disque ralentisseur.

3. Pale de rotor selon la revendication 1 ou 2, **caractérisée en ce que** la pointe de pale de rotor (3) est réalisée comme un composant séparé, et au moins un moyen de guidage (11) est prévu au niveau du raccordement au corps de pale de rotor (2), qui guide l'humidité et les particules solides en direction du dispositif de retenue (6, 7, 8).

4. Pale de rotor selon la revendication 3, **caractérisée en ce que** le moyen de guidage (11) est réalisé sous forme de raccordement à queue d'aronde de la pointe de pale de rotor (3) au corps de pale de rotor (2).

5. Pale de rotor selon l'une des revendications précédentes, **caractérisée en ce que** dans la pointe de pale de rotor (3) est prévu un orifice de maintenance qui présente un recouvrement (13) au moins partiellement transparent.

6. Pale de rotor selon l'une des revendications précédentes, **caractérisée en ce que** dans la pointe de pale de rotor (3) est prévu un moyen capteur (15) agencé pour détecter l'humidité et/ou le degré de givrage.

7. Pale de rotor selon l'une des revendications précédentes, **caractérisée en ce que** l'orifice de drainage (4) est ménagé sur le côté arrière en direction de rotation de la pointe de pale de rotor (3) et un orifice de ventilation (10) est ménagé sur le côté avant en direction de rotation de la pointe de pale de rotor (3), qui est en communication fluidique avec l'orifice de drainage (4).

8. Pointe de pale de rotor pour une pale de rotor selon l'une des revendications précédentes, qui est en communication avec un creux (21) du corps de pale de rotor et qui présente au moins un orifice de drainage (4) à travers lequel peut s'évacuer de l'humidité existant à l'intérieur du creux (21) du corps de pale de rotor, au moins un dispositif de retenue (6, 7, 8) pour des particules solides étant agencé devant l'orifice de drainage (4) dans la pointe de pale de rotor (3), **caractérisée en ce que** plusieurs dispositifs de retenue (6, 7, 8) sont agencés les uns derrière les autres et la perméabilité des dispositifs de retenue (6, 7, 8) diminue en direction de l'orifice de drainage (4).

9. Pointe de pale de rotor selon la revendication 8, **caractérisée en ce que** le dispositif de retenue (6, 7, 8) est réalisé sous forme de filtre, de filtre interchangeable, de déversoir pourvu d'un trop-plein (9) et/ou d'un disque ralentisseur.

10. Pointe de pale de rotor selon la revendication 8 ou 9, **caractérisée en ce qu'**au moins un moyen de guidage (11) est prévu au niveau du raccordement au corps de pale de rotor (2), qui guide l'humidité et les particules solides en direction du dispositif de retenue (6, 7, 8).

11. Pointe de pale de rotor selon la revendication 10, **caractérisée en ce que** le moyen de guidage (11) est réalisé sous forme de raccordement à queue d'aronde de la pointe de pale de rotor (3) au corps de pale de rotor (2).

12. Pointe de pale de rotor selon l'une des revendications 8 à 11, **caractérisée en ce que** dans la pointe de pale de rotor (3) est prévu un orifice de maintenance qui présente un recouvrement (13) au moins partiellement transparent.

13. Pointe de pale de rotor selon l'une des revendications 8 à 12, **caractérisée en ce que** dans la pointe de pale de rotor (3) est prévu un moyen (16) émettant de la lumière.

14. Pointe de pale de rotor selon l'une des revendications 8 à 13, **caractérisée en ce que** dans la pointe de pale de rotor (3) est prévu un moyen capteur (15) agencé pour détecter l'humidité et/ou le degré de givrage.

15. Pointe de pale de rotor selon l'une des revendications 8 à 14, **caractérisée en ce que** la pointe de pale de rotor (3) est réalisée comme récepteur.
